# EUROPÄISCHE PATENTSCHRIFT

(11) **EP 0 667 464 B1**
(45) Veröffentlichungstag und Bekanntmachung des Hinweises auf die Patenterteilung: **02.12.1998**
(21) Anmeldenummer: 95100162.7
(22) Anmeldetag: 07.01.1995
(51) Int. Cl.: F16C 11/06

(54) **Metallischer, nach Art eines Baukastensystems kombinierbarer Kugelzapfen eines Kugelgelenks**
Metal spherical gudgeon of a ball-joint, combinable according to a modular system
Pivot sphérique d'une articulation à rotule combinable selon un système modulaire

(30) Priorität: 05.02.1994 DE 4403584
(43) Veröffentlichungstag der Anmeldung: 16.08.1995
(73) Patentinhaber: LEMFÖRDER METALLWAREN AG., 49441 Lemförde (DE)
(72) Erfinder: Buhl, Reinhard, Dipl.-Ing., D-49163 Bohmte (DE); Lustig, Wilfried, D-49448 Hüde (DE)

(56) Entgegenhaltungen:
- EP-A- 0 186 856
- DE-A- 3 440 044
- FR-A- 1 501 223
- US-A- 2 678 841

## Beschreibung

Die Erfindung bezieht sich auf einen Kugelzapfen eines vorzugsweise hochbelastbaren Kugelgelenkes für Kraftfahrzeuge.

Aus der DE-A-34 40 044 ist insbesondere aus der Figur 4 ein elastisches Pendelgelenk für Fahrwerksteile in Kraftfahrzeugen bekannt, das einen inneren, kugeligen Gelenkkörper sowie ein diesen Gelenkkörper teilweise umschließendes Gehäuse aufweist, aus dessen offener Seite ein mit dem Gelenkkörper verbundener Gelenkzapfen herausgeführt ist. Eine Lagerschale aus elastischem Werkstoff ist zwischen dem inneren Gelenkkörper und dem Gehäuse angeordnet. Der innere, kugelige Gelenkkörper ist auf das in ihn hineinragende Ende des Gelenkzapfens aufsteckbar, wobei der Gelenkzapfen eine Rändelung sowie ein bearbeitbares Haltemittel aufweist, durch das er über eine Niet- oder Schraubverbindung in dem Gelenkkörper gehalten ist.

Auch einstückig ausgebildete Kugelzapfen entsprechen dem praktizierten Stande der Technik bei hochbelastbaren Kugelgelenken in Fahrwerken von Kraftfahrzeugen und sind in den vergangenen Jahrzehnten in sehr großer Stückzahl von den einschlägigen Herstellern produziert worden. Die Herstellung erfolgt einstückig durch mechanische Bearbeitung eines gegebenfalls vorgeformten Rohlings. Unterschiedliche Zapfengrößen erfordern somit unterschiedliche Rohlinge und entsprechend unterschiedliche Maschinensteuerprogramme für die Bearbeitung in der Serienfertigung. Ein besonderes Problem stellt die durch die mechanische Bearbeitung entstehende Kerbwirkung an der Oberfläche des Halses des Zapfenstumpfes an dessen hinterschnittenem Übergang in die Gelenkkugel dar, weil dadurch die Dauerbelastbarkeit erheblich reduziert wird.
Schwierig ist auch die Erfüllung hoher Anforderungen an einen Korrosionsschutz, vor allem am Hals des Zapfenstumpfes, an dessen Übergang in die Gelenkkugel. Dieser Korrosionsschutz wird bei den bekannten Kugelzapfen der millionenfach produzierten, einteiligen Bauart durch ein sehr aufwendiges Verfahren partiell aufgebracht.

Aus der FR-A-1 089 717 ist ein für einen speziellen Anwendungsfall konstruiertes Kugelgelenk bekannt, bei dem die Gelenkkugel mit einem Innenkonus einer Durchgangsbohrung auf einen Außenkonus eines Befestigungszapfens an einem Zapfenstumpf durch eine Gewindeschraube axial aufgepreßt ist. Eine sehr ähnliche Verbindung einer Gelenkkugel mit einem Zapfenstumpf ist auch aus der GB-A-1 020 671 für ein Gelenk relativ großer Abmessung bekannt. Darin weist die Gelenkkugel eine Durchgangsbohrung auf, durch die die Befestigungsschraube hindurchgeführt ist sowie eine innen liegende Ringschulter zur Auflage des Schraubenkopfes. Solche Kugelzapfenausbildungcn sind aufwendig und für große Stückzahlen zur Verwendung in hochbelasteten Kugelgelenken ebensowenig geeignet wie für die Übertragung von größeren Drehkräften zwischen der Gelenkkugel und dem Zapfenstumpf.

Die Befestigung einer Gelenkkugel aus Kunststoff auf einem zylindrisch ausgebildeten Kugelzapfen aus Stahl für geringbelastete Kugelgelenke zur Verwendung in Bedienungsgestängen oder dergleichen ist aus der DE-B-11 05 292 bekannt. Durch das DE-U-17 08 040 wird eine Lagerung kugelförmiger Steuerzapfen offenbart, bei der ein kugelförmiges Kopfteil für sich aus einem harten Material hergestellt und mit einer Sackbohrung auf einen Zapfen aus einem zähen, elastischen Material aufgesteckt ist.

Die Aufgabe der Erfindung besteht darin, eine Kugelzapfenausbildung für hochbelastbare Kugelgelenke im Fahrwerk eines Kraftfahrzeuges zu schaffen, welches im Hinblick auf große Stückzahlen kostengünstig mit modernen Fertigungsmethoden herstellbar ist und dabei in einem hohen Maße eine Anpassung an unterschiedliche Kugelgelenkgrößen gestattet.

Die Erfindung löst diese Aufgabe durch die Ausbildungsmerkmale des Patentanspruches 1.

Durch eine solche Ausbildung des Kugelzapfens ist es möglich, einheitlich ausgebildete Gelenkkugeln und unterschiedliche Zapfenstumpfe miteinander zu kombinieren, um dadurch ein Baukastensystem aufzubauen, durch das die Herstellunskosten erheblich reduziert werden können. Durch die Verbindung der Gelenkkugel mit einem durch Kaltumformung hergestellten Zapfenstumpf werden Kerbwirkungen an der Oberfläche des Kugelzapfens vermieden. Vorzugsweise wird für die Herstellung des Zapfenstumpfes ein Fließpreßverfahren zur Kaltumformung angewandt, so daß Oberflächen sehr genauer Güte entstehen und eine höhere Festigkeit des Zapfenstumpfes gegenüber herkömmlichen Kugelzapfen erreicht wird, die durch eine mechanische Bearbeitung profiliert wurden. Dies führt zu erheblichen Funktionsverbesserungen und einer Erhöhung der Dauerbelastbarkeit. Bei der Herstellung des Zapfenstumpfes werden die festigkeitserhöhenden Eigenschaften eines Kaltfließpreßverfahrens ausgenutzt. Dabei sorgt die Verformung des Befestigungszapfens zur Verbindung der Gelenkkugel mit dem Zapfenstumpf für eine sichere Verbindung zwischen diesen beiden Teilen auch ohne konische Paßflächen, die eine besondere Bearbeitung erforderlich machen würden. Die Durchgangsöffnung der Gelenkkugel und der Befestigungszapfen des Zapfenstumpfes weisen somit einen komplementär ineinandergreifenden Querschnitt, aber zylindrische Mantelflächen auf. Eine Bearbeitung des durch Kaltumformung hergestellten Zapfenstumpfes ist nicht erforderlich. Ein hohe Anforderungen erfüllender Korrosionsschutz ist mit einfachen Mitteln erreichbar.

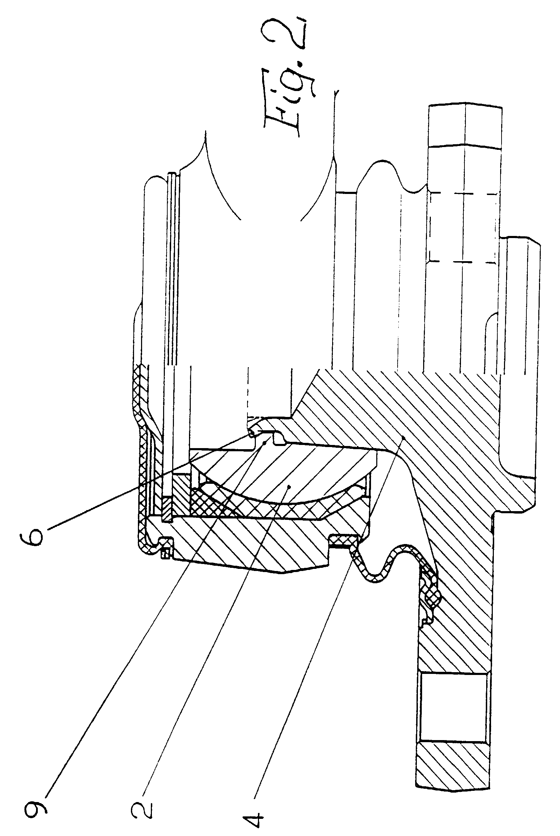

In der Zeichnung der Figur 2 ist ein Ausführungsbeispiel der Erfindung dargestellt. Es zeigen:
- Figur 1: eine Seitenansicht eines Kugelzapfens mit Schnitt durch die Gelenkkugel,
- Figur 2: eine Gelenkausbildung zur Hälfte in Ansicht und zur Hälfte im Schnitt und
- Figur 3: eine Seitenansicht eines gegenüber der Figur 1 abweichend ausgebildeten Kugelzapfens mit Balghaltenut und Schnitt durch die Gelenkkugel.

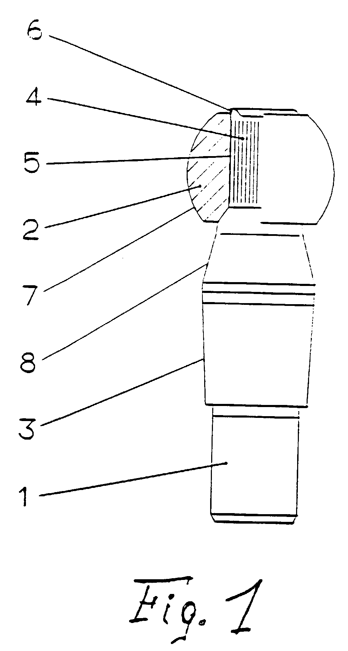

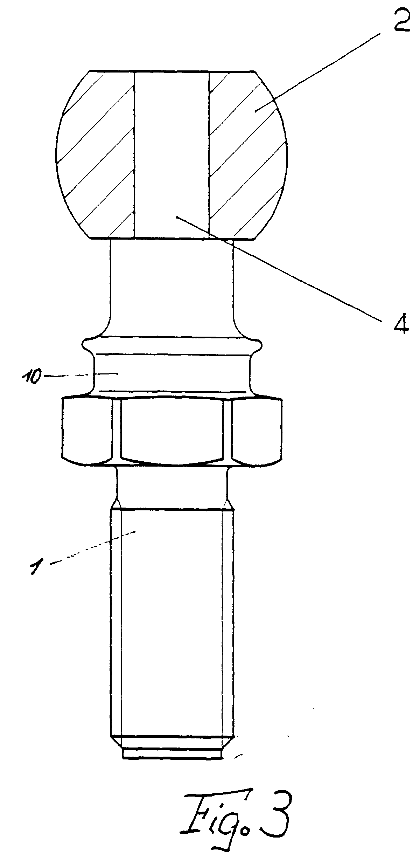

Die in den Figuren 1 und 3 dargestellten Kugelzapfen zeigen lediglich einzelne Merkmale einer erfindungsgemäßen Lösung.
Der Kugelzapfen nach dem Ausführungsbeispiel in Figur 1 besteht aus dem Zapfenstumpf 1 und der Gelenkkugel 2, die beide unabhängig voneinander hergestellt und danach dauerhaft miteinander verbunden sind. Der Zapfenstumpf 1 ist mit einem Außenkonus 3 in einen entprechenden Innenkonus eines Kraftfahrzeugteiles einsetzbar. Die Gelenkkugel 2 wird mit einer Lagerschale in das Gehäuse eines Kugelgelenks eingesetzt, welches mit einem anderen Kraftfahrzeugteil verbindbar ist.

Der Zapfenstumpf 1 weist an dem einen axialen Ende einen Befestigungszapfen 4 auf, auf den die Gelenkkugel 2 mit einer zylindrischen Durchgangsbohrung 5 drehfest aufgesteckt ist. Zur Verbindung der Gelenkkugel 2 mit dem Befestigungszapfen 4 dient ein am freien Ende des Befestigungszapfens 4 vorgesehener Bördelrand 6, welcher nach dem Aufstecken der Gelenkkugel 2 auf den Befestigungszapfen 4 nach außen umgebördelt ist. Der drehfeste Sitz der Gelenkkugel 2 auf dem Befestigungszapfen 4 wird dadurch erreicht, daß der Befestigungszapfen 4 und die Durchgangsöffnung 5 der Gelenkkugel 2 komplementär ineinandergreifende Querschnittsprofile aufweisen. Es sind zum Beispiel längsverlaufende Keile oder Rippen für diesen Zweck vorgesehen. Nicht ausgeschlossen werden soll eine leicht konische Ausbildung des Befestigungszapfens 4 und der Durchgangsbohrung 5 für spezielle Anwendungsfälle.

Auf den in Anpassung an spezielle Anwendungsfälle im Kaltfließpreßverfahren paßgenau hergestellten Zapfenstumpf 1 ist eine vorzugsweise gleichbleibend bemessene Gelenkkugel 2 mit entsprechender Bearbeitung und behandelter Kugeloberfläche 7 drehfest aufgesetzt. Gleichbleibende Kugelabmessungen ermöglichen einen erheblich verringerten Aufwand für die mechanische Bearbeitung und für die Vergütung der Gelenkkugel 2. Mittel zum Korrosionsschutz können vor allem auf den Hals 8 des Zapfenstumpfes 1 vor dem Aufbringen der Gelenkkugel 2 mit einfachen Mitteln aufgebracht werden, wobei dieser Korrosionsschutz gegenüber herkömmlichen Kugelzapfen vor allem in der Kehle zwischen der Gelenkkugeloberfläche 7 und dem Hals 8 des Zapfenstumpfes 1 verbessert ist. Sowohl die Gelenkkugel 2 als auch der Zapfenstumpf 1 bestehen aus metallischem Werkstoff und sind daher für hochbelastbare Kugelgelenke besonders geeignet.

In dem Ausführungsbeispiel der Figur 2 ist der Bördelrand 6 des Befestigungszapfens 4 zur Verringerung der Bauhöhe des Gelenks nach innen in die Gelenkkugel 2 verlegt. Am Innenmantel der Durchgangsbohrung 5 der Gelenkkugel 2 ist dazu ein in Achsrichtung des Zapfenstumpfes wirksamer Stützflansch 9 vorgesehen.

In der Figur 3 ist eine gegenüber der Darstellung in Figur 1 abgeänderte Ausbildung des Zapfenstumpfes 1 und des an ihm ausgebildeten Befestigungszapfens 4 gezeichnet, wobei letzterer zum Beispiel ein unrundes Querschnittprofil aufweist und in ein komplementäres Profil der Gelenkkugel eingesetzt und befestigt, zum Beispiel eingeschrumpft, ist. Der Zapfenstumpf 1 weist außerdem eine umlaufende Befestigungsnut 10 für das eine Ende eines zwischen dem Gehäuse eines Kugelgelenks und dem Kugelzapfen angeordneten Dichtungbalgs auf.

### BEZUGSZEICHENLISTE:

- 1: Zapfenstumpf
- 2: Gelenkkugel
- 3: Außenkonus
- 4: Befestigungszapfen
- 5: Durchgangsbohrung
- 6: Bördelrand
- 7: Kugeloberfläche
- 8: Zapfenhals
- 9: Stützflansch
- 10: Befestigungsnut

## Patentansprüche

1. Metallischer, nach Art eines Baukastensystems kombinierbarer Kugelzapfen eines Kugelgelenkes für Kraftfahrzeuge, welcher mit einer an einem Ende eines Zapfenstumpfes ausgebildeten Gelenkkugel in einer Lagerschale eines Gehäuses allseitig beweglich gelagert ist, wobei eine mechanisch bearbeitete Gelenkkugel (2) mit einer profilierten Durchgangsöffnung (5) drehfest auf einen endseitig mit einem Bördelrand (6) versehenen, komplementär zu der Durchgangsöffnung (5) geformten Befestigungszapfen (4) eines durch Kaltumformung hergestellten Zapfenstumpfes (1) in Richtung der Längsachse des Zapfenstumpfes (1) aufgesteckt und durch Verformung des sich innerhalb der Durchgangsöffnung (5) der Gelenkkugel (2) befindenden Bördelrandes (6) des Befestigungszapfens (4) gehalten ist, wobei die Durchgangsöffnung (5) der Gelenkkugel (2) hierfür einen in Achsrichtung des Zapfenstumpfes (1) wirksamen Stützflansch (9) aufweist.

2. Metallischer Kugelzapfen nach Anspruch 1,
dadurch gekennzeichnet, daß
eine an der Oberfläche (7) mechanisch bearbeitete Gelenkkugel (2) auf einen fließgepreßten Zapfenstumpf (1) drehfest aufgesteckt und durch Kaltverformung eines Bördelrandes (6) am Ende des Befestigungszapfens (4) am Zapfenstumpf (1) befestigt ist.

3. Metallischer Kugelzapfen nach Anspruch 1 oder 2,
dadurch gekennzeichnet, daß
die Durchgangsöffnung (5) der Gelenkkugel (2) und der Befestigungszapfen (4) des Zapfenstumpfes (1) in der Grundform zylindrisch ausgebildet sind.

4. Metallischer Kugelzapfen nach Anspruch 1 oder 2,
dadurch gekennzeichnet, daß
die Durchgangsöffnung (5) der Gelenkkugel (2) und der Befestigungszapfen (4) des Zapfenstumpfes (1) in der Grundform konisch ausgebildet sind.

5. Metallischer Kugelzapfen nach Anspruch 1 oder 2,
dadurch gekennzeichnet, daß
die Durchgangsöffnung (5) der Gelenkkugel (2) und der Befestigungszapfen (4) des Zapfenstumpfes (1) in der Grundform unrund ausgebildet sind.

## Claims

1. Metallic ball pin, which can be combined in the manner of a unit assembly system, of a ball-and-socket joint for motor vehicles, which pin is mounted with a joint ball formed at one end of a pin stub in a bearing shell of a housing so as to be mobile all-round, wherein a machined joint ball (2) with a profiled through-opening (5) is fitted in a non-rotatable manner on a securing pin (4), which is provided at the end with a beaded edge (6) and is shaped so as to complement the through-opening (5), of a pin stub (1), which is produced by cold working, in the direction of the longitudinal axis of the pin stub (1) and retained by working the beaded edge (6), which is located inside the through-opening (5) in the joint ball (2), of the securing pin (4), and wherein the through-opening (5) in the joint ball (2) comprises a support flange (9), which is effective in the axial direction of the pin stub (1), for this purpose.

2. Metallic ball pin according to claim 1, characterised in that a joint ball (2) machined at the surface (7) is fitted in a non-rotatable manner on an extruded pin stub (1) and secured to the pin stub (1) by cold working a beaded edge (6) at the end of the securing pin (4).

3. Metallic ball pin according to claim 1 or 2,
characterised in that the through-opening (5) in the joint ball (2) and the securing pin (4) of the pin stub (1) have a cylindrical basic shape.

4. Metallic ball pin according to claim 1 or 2,
characterised in that the through-opening (5) in the joint ball (2) and the securing pin (4) of the pin stub (1) have a conical basic shape.

5. Metallic ball pin according to claim 1 or 2,
characterised in that the through-opening (5) in the joint ball (2) and the securing pin (4) of the pin stub (1) have a non-circular basic shape.

## Revendications

1. Pivot à rotule d'une articulation à rotule pour des véhicules automobiles, qui est métallique et peut être combiné dans un système modulaire, pivot à rotule qui est monté de façon mobile dans toutes les directions avec une rotule d'articulation réalisée à une extrémité d'un tronc de pivot et logeant dans une coquille de coussinet d'un boîtier, dans lequel une rotule d'articulation (2) usinée mécaniquement et comprenant une ouverture de passage (5) profilée est emboîtée, de manière fixe en rotation, en direction de l'axe longitudinal du tronc du pivot (1), sur un pivot de fixation (4) du tronc de pivot (1) réalisé par formage à froid, le pivot de fixation (4) étant formé de façon complémentaire par rapport à l'ouverture de passage (5) et étant muni à une extrémité d'un collet rabattu (6), et la rotule d'articulation (2) étant maintenue par une déformation du collet rabattu (6) du pivot de fixation (4), se trouvant à l'intérieur de l'ouverture de passage (5) de la rotule d'articulation (2), l'ouverture de passage (5) de la rotule d'articulation (2) présentant à cet effet un flasque d'appui (9) agissant en direction de l'axe du tronc de pivot (1).

2. Pivot à rotule métallique selon la revendication 1, caractérisé en ce qu'une rotule d'articulation (2) usinée mécaniquement à la surface (7) est emboîtée de manière fixe en rotation sur un tronc de pivot (1) réalisé par extrusion et est fixée par une déformation à froid d'un collet rabattu (6) situé à l'extrémité du pivot (4) de fixation disposé sur le tronc de pivot (1).

3. Pivot à roule métallique selon la revendication 1 ou 2, caractérisé en ce que l'ouverture de passage (5) de la rotule d'articulation (2) et le pivot de fixation (4) du tronc de pivot (1) possèdent une forme de base cylindrique.

4. Pivot à rotule métallique selon la revendication 1 ou 2, caractérisé en ce que l'ouverture de passage (5) de la rotule (2) d'articulation et le pivot (4) de fixation du tronc de pivot (1) possèdent une forme de base conique.

5. Pivot à rotule métallique selon la revendication 1 ou 2, caractérisé en ce que l'ouverture du passage (5) de la rotule (2) d'articulation et le pivot de fixation (4) du tronc de pivot (1) possèdent une forme de base non ronde.
